# FASCICULE DE BREVET EUROPEEN

(11) **EP 3 917 797 B1**
(45) Date de publication et mention de la délivrance du brevet: **01.03.2023**
(21) Numéro de dépôt: 20704934.7
(22) Date de dépôt: 21.01.2020
(51) Int. Cl.: B60L 5/28, B60L 5/22

(54) **PANTOGRAPHE ET VEHICULE FERROVIAIRE COMPORTANT UN TEL PANTOGRAPHE**
SCHERENSTROMABNEHMER UND SCHIENENFAHRZEUG MIT SOLCH EINEM SCHERENSTROMABNEHMER
PANTOGRAPH AND RAIL VEHICLE COMPRISING SUCH A PANTOGRAPH

(30) Priorité: 28.01.2019 FR 1900728
(43) Date de publication de la demande: 08.12.2021
(73) Titulaire: Faiveley Transport Tours, 37701 Saint Pierre des Corps Cedex (FR)
(72) Inventeur: CAFFIER, Benjamin, 37800 SAINT MAURE DE TOURAINE (FR)
(74) Mandataire: Schmidt, Martin Peter
(86) Numéro de dépôt international: PCT/FR2020/000013
(87) Numéro de publication internationale: WO 2020/157397

(56) Documents cités:
- FR-A1- 3 062 824
- JP-A- H08 308 013

## Description

### DOMAINE TECHNIQUE

La présente invention concerne le domaine des pantographes, en particulier pour un véhicule ferroviaire.

### ARRIÈRE-PLAN TECHNOLOGIQUE

Pour un véhicule ferroviaire muni d'un moteur de traction électrique, les pantographes assurent le contact électrique entre l'unité de traction (par exemple la locomotive) et la caténaire. Dans ce but le pantographe exerce, contre la caténaire, une force de pression qui est en théorie sensiblement constante. De plus, le pantographe est soumis aux effets aérodynamiques en fonction de son développement (qui dépend de la hauteur de la caténaire par rapport à la voie ferroviaire), en fonction de la vitesse d'avancement du véhicule ferroviaire, et en fonction de la vitesse de direction du vent. Selon le cas, les effets aérodynamiques précités peuvent augmenter ou diminuer la pression exercée de manière effective par le pantographe contre la caténaire. Pour les trains à grande vitesse, les effets aérodynamiques peuvent être très considérables. D'une manière générale, il est souhaitable que la pression exercée par le pantographe contre la caténaire soit indépendante du développement du pantographe, quelle que soit la vitesse du véhicule ferroviaire.

Il est connu de disposer des ailerons sur le pantographe afin de modifier son comportement aérodynamique. A titre d'exemple, la demande de brevet japonais publiée sous le numéro JP H08308013 A décrit un pantographe du type comportant un châssis, un archet destiné à être au contact d'une caténaire pour capter un courant d'alimentation passant dans la caténaire, un bras articulé reliant l'archet au châssis et conçu pour se développer verticalement afin de déplacer dans le plan vertical l'archet par rapport au châssis, au moins un aileron et un dispositif d'orientation de l'aileron. Ce dernier est conçu pour faire varier l'angle de l'aileron avec la direction longitudinale en fonction du déploiement du bras articulé, par le biais d'un organe de commande, articulé à la fois sur la tige supérieure principale et sur la tige supérieure auxiliaire du bras.

Dans ce pantographe connu, le dispositif d'orientation est conçu pour faire augmenter graduellement l'angle de l'aileron au fur et à mesure du déploiement du bras articulé, depuis une valeur négative par rapport à l'horizontale jusqu'à une valeur positive par rapport à l'horizontale. Lorsque l'angle est négatif, l'aileron réduit la pression de l'archet sur la caténaire, tandis que lorsque l'angle est positif, l'aileron augmente la pression de l'archet sur la caténaire. Ainsi, l'aileron compense l'effort aérodynamique exercé sur le pantographe, cet effort réduisant d'autant plus la pression de l'archet sur la caténaire que l'élévation du pantographe est importante.

La variation d'angle de l'aileron est déterminée par la longueur des côtés d'un quadrilatère. Si le quadrilatère est un parallélogramme, il n'y a aucune variation de l'angle quelle que soit l'élévation du pantographe. En modifiant la longueur de deux côtés adjacents, il est possible d'ajuster la variation d'angle. Cette invention est bien adaptée à la plupart des situations, lorsque la hauteur de la caténaire reste dans une plage limitée sur les zones où le train peut rouler à haute vitesse haute vitesse, là où l'effort aérodynamique est important. Par contre, lorsque le pantographe doit fonctionner à haute vitesse sur une large plage d'extension, le dispositif n'offre pas assez de possibilités de modification de la loi de variation d'angle de l'aileron pour compenser au plus juste l'effort aérodynamique.

Ce type de situation se rencontre par exemple lorsque la variation du développement du pantographe augmente. Traditionnellement, les pantographes sont conçus pour un développement qui varie entre environ 300 mm et environ 2 600 mm. Pour certains programmes de véhicules ferroviaires, il s'avère nécessaire de prévoir un développement plus important, jusqu'à 3 600 mm.

Afin de piloter de manière appropriée la variation de l'angle des ailerons, on peut prévoir de faire appel à des ailerons de type motorisé. Cette solution est cependant coûteuse, et induit un surpoids significatif.

Afin de pallier les problèmes liés à l'enseignement de JP H08308013 A, la demanderesse a proposé par FR 3 062 824 un dispositif d'orientation comprenant deux organes de commande distincts, qui sont chacun articulés à la fois sur la tige supérieure principale et sur la tige supérieure auxiliaire du bras. Sur une première plage de développement du bras articulé, le premier organe de commande est apte à commander la variation de l'angle de l'aileron indépendamment du deuxième organe de commande, de manière à conférer un premier profil de variation d'angle à l'aileron sur cette première plage. Par ailleurs, sur une deuxième plage de développement du bras articulé dans laquelle l'archet se déplace entre la position intermédiaire et une position haute, le deuxième organe de commande est apte à commander la variation de l'angle de l'aileron, de manière à conférer un deuxième profil de variation d'angle à l'aileron sur cette deuxième plage. De manière typique, le premier profil de variation correspond à un angle de valeur constante, notamment nulle. Par ailleurs le deuxième profil de variation d'angle correspond à un angle de valeur croissante, notamment linéaire.

Cette solution alternative présente cependant des problèmes spécifiques. En effet, elle implique une structure mécanique relativement complexe. Par ailleurs les effets aérodynamiques, générés par les variations d'angle de l'aileron, ne s'avèrent pas totalement satisfaisants.

Compte tenu de ce qui précède, l'invention vise à remédier à au moins certains inconvénients de l'art antérieur présenté ci-dessus.

Elle vise en particulier à proposer un pantographe équipé d'au moins un aileron mobile, présentant des effets aérodynamiques supplémentaires vis-à-vis de ceux permis par FR 3 062 824.

Elle vise également à proposer un tel pantographe, dont la structure mécanique est relativement peu complexe et dont le prix de revient est raisonnable.

### OBJETS DE L'INVENTION

Un premier objet de l'invention est un pantographe (108) comportant :
- un châssis (202) auquel un repère (R) est attaché, le repère (R) comportant une direction longitudinale (L), une direction verticale (V) et une direction transversale (T), la direction longitudinale (L) et la direction verticale (V) définissant ensemble un plan vertical,
- un archet (208) destiné à être au contact d'une caténaire (104) pour capter un courant d'alimentation passant dans la caténaire (104),
- un bras articulé (210) reliant l'archet (208) au châssis (202) est conçu pour se développer verticalement afin de déplacer dans le plan vertical l'archet (208) par rapport au châssis (202), ce bras articulé comprenant au moins une tige principale (216) et au moins une tige auxiliaire (220), chaque tige principale et chaque tige auxiliaire étant sensiblement parallèles et mobiles l'une par rapport à l'autre, selon leur axe principal commun,
- un ensemble d'aileron comprenant au moins un aileron mobile (10) par rapport au bras articulé,
- des moyens (3) de support de l'aileron mobile (10), ces moyens de support étant montés de manière mobile sur l'une parmi la tige principale et la tige auxiliaire, dite tige de support (216)
- des moyens d'immobilisation (4, 7), aptes à immobiliser les moyens de support par rapport à la tige de support,
- des moyens d'orientation (8), montés sur l'autre parmi la tige principale et la tige auxiliaire, dite tige d'orientation (220), ces moyens d'orientation étant aptes à déplacer les moyens de support par rapport à la tige de support à l'encontre des moyens d'immobilisation
ces moyens d'orientation étant adaptés pour que
- sur une première plage de développement du bras articulé (210) dans laquelle l'archet (208) se déplace entre une position basse et une position intermédiaire, ces moyens d'orientation n'agissent pas sur les moyens de support, de sorte qu'un angle caractéristique (α10) de l'aileron, formé dans le plan vertical par l'aileron mobile et l'axe principal (A216) de la tige de support, est sensiblement constant ; et
- sur une deuxième plage de développement du bras articulé (210) dans laquelle l'archet (208) se déplace entre la position intermédiaire et une position haute, ces moyens d'orientation agissent sur les moyens de support, de sorte que l'angle caractéristique de l'aileron varie de façon continue.

De manière habituelle, le bras articulé du pantographe est composé de plusieurs tronçons, typiquement au nombre de deux, dont chacun comprend une tige principale et une tige auxiliaire. Les deux tiges de chaque tronçon sont mutuellement sensiblement parallèles, en étant mobiles l'une par rapport à l'autre lors du développement du pantographe, selon l'axe principal de ces tiges.

Conformément à l'invention, l'aileron mobile est monté sur des moyens de support, lesquels sont prévus sur l'une des tiges formant le bras articulé, laquelle est dénommée tige de support. Ces moyens de support coopèrent avec des moyens d'immobilisation, qui sont aptes à immobiliser ces moyens de support et, par conséquent, l'aileron mobile vis-à-vis de la tige de support.

Il est par ailleurs prévu des moyens d'orientation, qui sont disposés sur l'autre tige, dite d'orientation, qui est sensiblement parallèle à la tige de support ci-dessus. Ces moyens d'orientation sont aptes à repousser les moyens de support à l'encontre des moyens d'immobilisation, de manière à induire un déplacement de l'élément mobile par rapport à la tige de support.

Conformément à l'invention le développement global du bras articulé est divisé en deux plages, typiquement successives. Dans une première plage, ou plage initiale, les moyens d'orientation n'agissent pas sur les moyens de support, de sorte que ces derniers sont immobilisés par rapport à la tige de support grâce aux moyens d'immobilisation. Sur cette première plage, l'angle que forme l'aileron avec l'axe principal de la tige de support est sensiblement constant. En d'autres termes, cet aileron est globalement immobile par rapport à cette tige de support.

Puis, dans une deuxième plage, ou plage finale, les moyens d'orientation agissent désormais sur les moyens de support. Dans ces conditions, ces derniers se déplacent par rapport à la tige de support, à l'encontre des moyens d'immobilisation. De la sorte l'aileron mobile a également tendance à se déplacer par rapport à cette tige de support. Par conséquent, l'angle entre cet aileron et l'axe principal de cette tige de support n'est plus constant. On donnera, dans la suite de la description, différents exemples de profils possibles que l'invention permet de conférer à cet angle, dans cette deuxième plage.

L'invention présente de nombreux avantages, vis-à-vis de l'art antérieur présenté ci-dessus.

On notera tout d'abord qu'il est du mérite de la demanderesse, d'avoir identifié les inconvénients liés à l'enseignement de FR 3 062 824. En effet la solution proposée par ce document ne permet pas de répondre à des situations, dans lesquels des profils différents de variation d'angle de l'aileron sont nécessaires. En détail, sur la première plage, le profil d'angle n'est pas substantiellement modifiable. Par ailleurs, sur la plage finale, ce profil d'angle ne peut pas être modifié dans une mesure significative.

Dans la première plage du développement du pantographe conforme à l'invention, le profil d'angle de l'aileron mobile n'est pas non plus modifiable. En revanche, dans la plage finale, l'invention autorise des possibilités de modifications qui sont nettement plus importantes que dans l'art antérieur. Cet avantage apparaîtra plus clairement, à la lecture de la description faite en référence aux figures 20 et 21. En d'autres termes, l'invention améliore la solution proposée par FR 3 062 824, en apportant d'autres effets aérodynamiques exercés sur le pantographe.

Par ailleurs l'invention autorise une simplification significative de la structure du pantographe, en particulier par rapport à l'enseignement de FR 3 062 824. Dans cet esprit, on soulignera que la présente invention fait appel notamment à des moyens d'orientation qui ne sont avantageusement pas articulés sur la tige orientation. Par opposition, on rappellera que FR 3 062 824 utilise plusieurs organes de commande qui sont chacun articulés sur le bras du pantographe, à savoir une solution nettement plus complexe d'un point de vue mécanique.

Selon d'autres caractéristiques de l'invention :
- les moyens de support (3) sont montés de manière pivotante par rapport à la tige de support (216), autour d'un axe (A3) transversal à cette tige de support.
- les moyens de support comprennent un organe de support, notamment un levier (3), solidaire de l'aileron mobile (10).
- les moyens d'immobilisation comprennent des moyens élastiques (4) ainsi qu'une butée (7) solidaire de la tige de support (216), les moyens de support étant aptes à venir en appui sur ladite butée, sous l'effet des moyens élastiques, dans la première plage de développement.
- les moyens d'orientation comprennent un organe d'orientation, notamment une plaque (8), monté fixe sur la tige d'orientation (220).
- le bras comprend une tige supérieure principale (216) formant ladite tige de support, ainsi qu'une tige supérieure auxiliaire (220) formant ladite tige d'orientation.
- la valeur sensiblement constante (αc) de l'angle caractéristique, sur la première plage de développement, est voisine de 20°.
- la valeur (αMax) de l'angle caractéristique, pour un développement maximal du bras articulé, est voisine de 60°.
- il est prévu un aileron fixe (12) par rapport à la tige de support, ainsi qu'un aileron mobile (10) par rapport à la tige de support, ces deux ailerons étant disposés sur des côtés latéraux opposés de cette tige de support.
- l'aileron fixe et l'aileron mobile présentent des concavités opposées, en particulier l'aileron fixe présente une concavité tournée vers le bas et l'aileron mobile présente une concavité tournée vers le haut.
- les moyens d'orientation sont montés de manière coulissante sur la tige d'orientation.
- les moyens de support et/ou les moyens d'orientation présentent une longueur réglable, notamment grâce à une structure télescopique.

Selon un deuxième objet de l'invention, il est également proposé un véhicule ferroviaire comportant :
- un toit,
- un pantographe tel que ci-dessus, le châssis du pantographe étant fixé au toit du véhicule ferroviaire.

### DESCRIPTION DES FIGURES

L'invention va être décrite ci-après, en référence aux dessins annexés, donnés uniquement à titre d'exemples non limitatifs, dans lesquels :
[Fig. 1] est une vue de profil d'un véhicule ferroviaire mettant en oeuvre l'invention.
[Fig. 2] est une vue de profil d'un pantographe du véhicule ferroviaire de la figure 1.
[Fig. 3] est une vue en perspective illustrant plus particulièrement un dispositif de compensation de pression du pantographe de la figure 2 comportant en particulier un système d'aileron.
[Fig. 4] est une vue de profil du système d'aileron et du dispositif d'orientation de ce système d'aileron, lors d'une première étape du développement du pantographe.
[Fig. 5] est un schéma de principe, illustrant notamment les liaisons mécaniques entre les différents éléments du système d'aileron et de son dispositif d'orientation, ainsi que le positionnement de ces éléments lors de l'étape illustrée à la figure 4.
[Fig. 6] est une vue de profil du système d'aileron et du dispositif d'orientation de ce système d'aileron, lors d'une deuxième étape du développement du pantographe.
[Fig. 7] est un schéma de principe, illustrant notamment les liaisons mécaniques entre les différents éléments du système d'aileron et de son dispositif d'orientation, ainsi que le positionnement de ces éléments lors de l'étape illustrée à la figure 6.
[Fig. 8] est une vue de profil du système d'aileron et du dispositif d'orientation de ce système d'aileron, lors d'une troisième étape du développement du pantographe.
[Fig. 9] est un schéma de principe, illustrant notamment les liaisons mécaniques entre les différents éléments du système d'aileron et de son dispositif d'orientation, ainsi que le positionnement de ces éléments lors de l'étape illustrée à la figure 8.
[Fig. 10] est une vue de profil du système d'aileron et du dispositif d'orientation de ce système d'aileron, lors d'une quatrième étape du développement du pantographe.
[Fig. 11] est un schéma de principe, illustrant notamment les liaisons mécaniques entre les différents éléments du système d'aileron et de son dispositif d'orientation, ainsi que le positionnement de ces éléments lors de l'étape illustrée à la figure 10.
[Fig. 12] est un graphique représentant l'évolution d'un angle caractéristiques d'un aileron mobile appartenant au pantographe conforme à l'invention, en fonction du développement du pantographe.
[Fig. 13] est un schéma de principe, analogue à la figure 5, illustrant les liaisons mécaniques entre les différents éléments d'un pantographe conforme à une variante de réalisation de l'invention, lors d'une première étape du développement de ce pantographe.
[Fig. 14] est un schéma de principe, analogue à la figure 7, illustrant les liaisons mécaniques entre les différents éléments du pantographe de la figure 13, lors d'une deuxième étape de son développement.
[Fig. 15] est un schéma de principe, analogue à la figure 9, illustrant les liaisons mécaniques entre les différents éléments du pantographe de la figure 13, lors d'une troisième étape de son développement.
[Fig. 16] est un schéma de principe, analogue à la figure 11, illustrant les liaisons mécaniques entre les différents éléments du pantographe de la figure 13, lors d'une quatrième étape de son développement.
[Fig. 17] est un graphe analogue à la figure 12, représentant l'évolution de l'angle caractéristique de l'aileron mobile appartenant au pantographe des figures 13 à 16, en fonction de son développement.
[Fig. 18] est un schéma de principe, analogue à la figure 16, illustrant les liaisons mécaniques entre les différents éléments d'un pantographe conforme à une autre variante de réalisation de l'invention, lors de la quatrième étape de son développement.
[Fig. 19] est un graphe analogue aux figures 12 et 17, représentant l'évolution de l'angle caractéristique de l'aileron mobile du pantographe de l'invention, en fonction de la distance séparant les moyens de support et les moyens d'orientation.
[Fig. 20] est un graphe analogue aux figures 12,17 et 19, représentant l'évolution de l'angle caractéristique de l'aileron mobile du pantographe de l'invention, en fonction de la dimension longitudinale des moyens de support.
[Fig. 21] est un graphe représentant l'évolution de l'angle caractéristique, pris par rapport à l'horizontale, d'un aileron mobile équipant un pantographe conforme à l'art antérieur.
[Fig. 22] est un graphe, analogue à la figure 21, représentant l'évolution de l'angle caractéristique, pris par rapport à l'horizontale, d'un aileron équipant un pantographe conforme à l'invention.

### DESCRIPTION DÉTAILLÉE

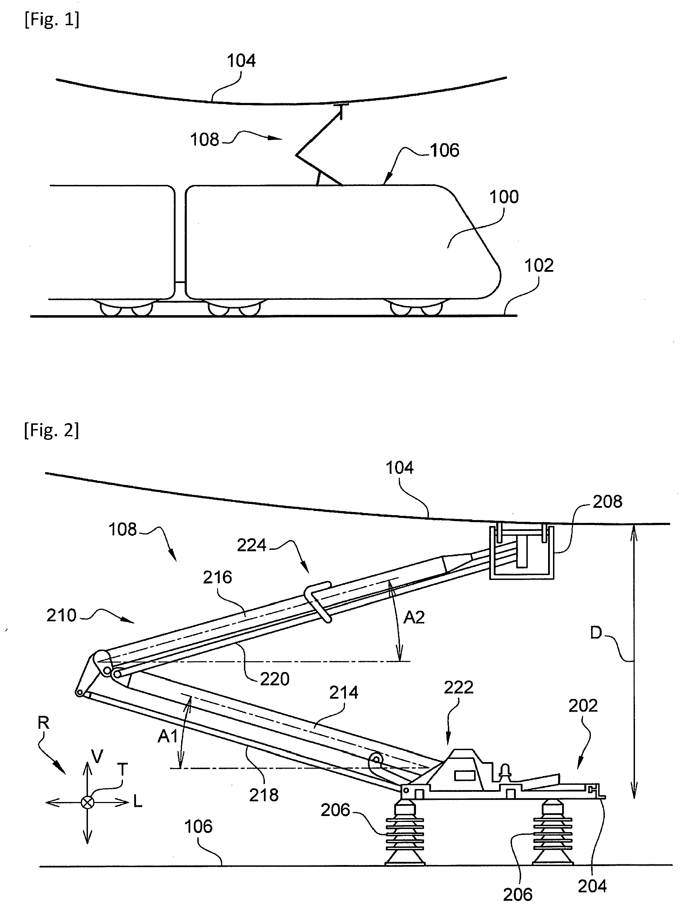

En référence à la figure 1, un véhicule ferroviaire 100 mettant en oeuvre l'invention va à présent être décrit.

Le véhicule ferroviaire 100 est conçu pour circuler sur une voie ferroviaire 102 au-dessus de laquelle s'étend une caténaire 104 dans laquelle passe un courant électrique d'alimentation. Le véhicule ferroviaire 100 comporte un toit 106 sur lequel est fixé un pantographe 108 conçu pour capter le courant électrique d'alimentation de la caténaire 104 et ainsi alimenter électriquement le véhicule ferroviaire 100.

En référence, notamment à la figure 2, le pantographe 108 va à présent être décrit plus en détail.

Le pantographe 108 comporte tout d'abord un châssis 202 fixé au toit 106 du véhicule ferroviaire 100. Dans l'exemple décrit, le châssis 202 comporte un cadre 204 et des isolateurs électriques 206 reliant le cadre 204 au toit 106 du véhicule ferroviaire 100.

Un repère R est attaché au châssis 202. Le repère R comporte une direction longitudinale L, une direction verticale V et une direction transversale T (perpendiculaire au plan de la feuille sur la figure 2). La direction longitudinale L et la direction verticale V définissent ensemble un plan vertical (le plan de la feuille sur la figure 2).

Dans l'exemple décrit, la direction longitudinale L correspond à la direction horizontale usuelle dans le sens de circulation du véhicule ferroviaire 100 lorsque ce dernier circule sur une voie ferroviaire 102 horizontale. En outre, la direction verticale V correspond à la direction verticale usuelle.

Dans la description et les revendications qui vont suivre, les termes de positionnement utilisés seront entendus par référence à ce repère R. En particulier, les angles évoqués par la suite seront pris dans le plan vertical.

En outre, dans la description qui va suivre, un angle sensiblement constant est un angle constant à 1° près.

Le pantographe 108 comporte en outre un archet 208 destiné à être au contact de la caténaire 104 afin de capter le courant d'alimentation.

La caténaire 104 est située verticalement à une distance du châssis 202 qui peut fortement varier. Par exemple, cette distance peut varier entre 600 mm et 3 600 mm.

Ainsi, pour pallier les variations de la distance entre la caténaire 104 et le châssis 202, le pantographe 108 comporte en outre un bras articulé 210 reliant l'archet 208 au châssis 202, de sorte que l'archet 208 se trouve à une distance D variable du châssis 202. Le bras articulé 210 est conçu pour se développer verticalement afin de déplacer l'archet 208 par rapport au châssis 202 dans le but de maintenir l'archet 208 au contact de la caténaire 104. Ainsi, le bras articulé 210 est conçu pour, d'une part, se développer verticalement afin d'écarter l'archet 208 du châssis 202 lorsque la distance entre la caténaire 104 et le châssis 202 augmente et, d'autre part, se replier verticalement afin de rapprocher l'archet 208 du châssis 202 lorsque la distance entre la caténaire 104 et le châssis 202 diminue.

Plus précisément, dans l'exemple décrit, le bras articulé 210 est en deux parties. Il comporte ainsi une tige inférieure principale 214 montée transversalement pivotante sur le châssis 202 (par exemple, sur le cadre 204). La tige inférieure principale 214 présente un angle A1 avec la direction longitudinale L. Le bras articulé 210 comporte en outre une tige supérieure principale 216 montée transversalement pivotante sur la tige inférieure principale 214 et présentant un angle A2 avec la direction longitudinale L. L'archet 208 est monté transversalement pivotant sur la tige supérieure principale 216.

Le bras articulé 210 comporte en outre une tige inférieure auxiliaire 218 montée transversalement pivotante sur le châssis 202 (par exemple, sur le cadre 204) et sur la tige supérieure principale 216, de manière à asservir l'angle A2 de la tige supérieure principale 216 à l'angle A1 de la tige inférieure principale 214, de sorte que l'augmentation de l'angle A1 entraîne l'augmentation de l'angle A2.

Le bras articulé 210 comporte en outre une tige supérieure auxiliaire 220 montée transversalement pivotante sur la tige inférieure principale 214 et sur l'archet 208, de manière à ce que l'archet 208 garde un angle sensiblement constant avec la direction longitudinale L quel que soit le développement du bras articulé 210.

Le pantographe 108 comporte en outre un dispositif de rappel 222 conçu pour inciter le bras articulé 210 à se développer. Ainsi, l'archet 208 est maintenu au contact de la caténaire 104. Le dispositif de rappel 222 est, par exemple, conçu pour faire pivoter la tige inférieure principale 214 afin d'augmenter l'angle A1. Le dispositif de rappel 222 comporte par exemple un coussin d'air, un ressort ou bien un moteur électrique.

Comme expliqué dans la partie introductive de la présente description, du fait de sa construction mécanique, le pantographe assure en théorie une pression constante sur la caténaire. Cependant, cette pression est susceptible d'être modifiée à cause des effets aérodynamiques.

Pour réguler la pression de l'archet 208 sur la caténaire 104 lorsque le bras articulé 210 est fortement développé, le pantographe 108 comporte en outre un dispositif de compensation de pression 224 monté sur le bras articulé 210.

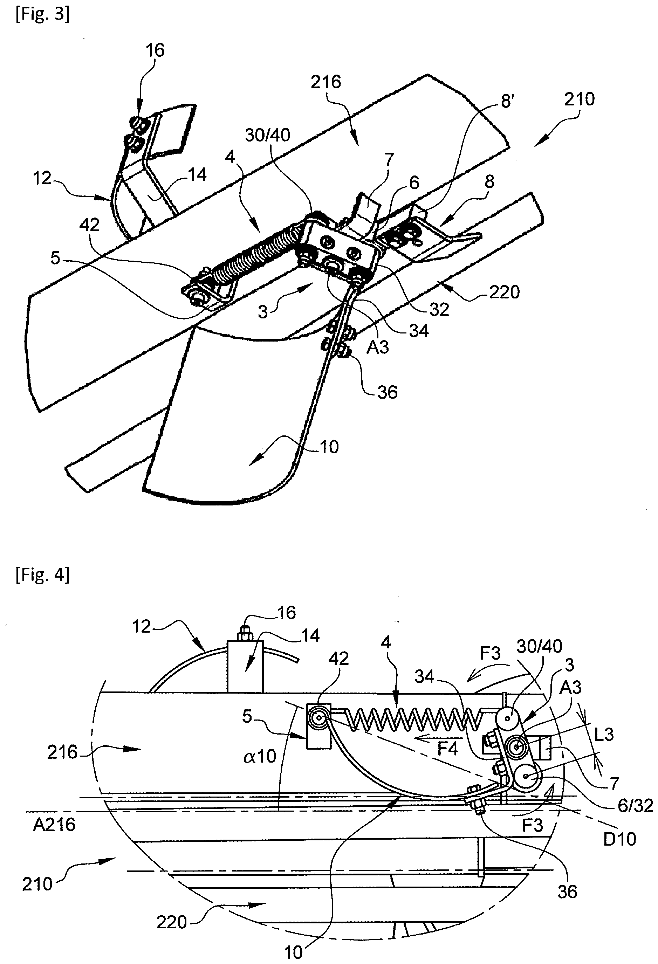

En référence aux figures 3 et suivantes, le dispositif de compensation de pression 224 va à présent être décrit plus en détail.

En référence aux figures 3 et 4 le dispositif de compensation de pression comporte tout d'abord un système d'aileron, encore dénommé ensemble d'aileron, lequel comporte dans l'exemple décrit deux ailerons 10 et 12 présentant des concavités respectives orientées à l'opposé l'une de l'autre. Ces deux ailerons sont montés sur la tige supérieure principale 216, comme cela sera décrit plus en détail dans ce qui suit. Il convient de noter que l'un 12 de ces ailerons est fixe par rapport à cette tige, alors que l'autre aileron 10 est mobile par rapport à cette même tige.

L'aileron fixe 12, montré seulement de manière partielle sur les figures, est placé sur un premier côté latéral de la tige 216. Il présente une concavité tournée vers le haut à savoir que, lorsque que le bras articulé est horizontal, les extrémités de cet aileron 12 se situent au-dessous de sa partie centrale. Cet aileron fixe est solidarisé sur la tige 216 par tous moyens appropriés. Ainsi, dans l'exemple illustré, il est prévu un support 14 solidaire de cette tige, sur lequel l'aileron 12 est fixé de manière amovible, notamment grâce à un système de vis et écrou 16.

Les figures 4 à 11 illustrent de manière plus détaillée la fixation de l'aileron mobile 10. Ce dernier, qui est placé sur le côté latéral opposé de la tige 216, présente une concavité tournée vers le bas, à savoir inverse de celle de l'aileron fixe. Cet aileron mobile définit, avec l'axe principal A216 de la tige supérieure principale 216, un angle dit caractéristique, lequel est noté α10. Par convention cet angle est pris entre cet axe principal et la droite D10, passant par les extrémités libres opposées de l'aileron mobile. Ces figures montrent également de façon plus précise les différents moyens mécaniques, permettant le positionnement et la mise en mouvement éventuelle de l'aileron mobile.

Ces moyens comprennent tout d'abord un organe de support formé par un levier 3, lequel est monté pivotant sur la tige 216 autour d'un axe A3 s'étendant transversalement, à savoir d'arrière en avant de la feuille. À une première extrémité 30, ce levier supporte l'extrémité 40 d'un ressort de traction 4, dont l'autre extrémité 42 est montée sur une patte 5 solidaire de la tige 216. L'autre extrémité 32 du levier supporte un galet 6, dont la fonction sera explicitée dans ce qui suit.

Ce galet est apte à venir en appui contre une butée 7, laquelle est montée à demeure sur la tige 216. Ce levier supporte en outre une cornière 34 en forme de L, qui permet la fixation de l'aileron proprement dit. De façon avantageuse, cette fixation est de type amovible, notamment par un système de vis et écrou 36. Comme cela ressortira plus clairement à la lecture de la suite de la description, le ressort 4 et la butée 7 forment des moyens d'immobilisation du levier 3 et, par conséquent, de l'aileron mobile.

Par ailleurs, la tige auxiliaire 220 supporte une plaque métallique 8, qui est destinée à coopérer avec le galet 6. Cette plaque métallique se trouve fixée sur cette tige 220 par tous moyens appropriés, notamment par soudage. On notera que cette plaque n'est pas articulée sur cette tige 220, contrairement au levier qui lui est articulé sur la tige 216. Cette plaque 8 est avantageusement équipée d'un poussoir 8', assurant une meilleure coopération avec le galet 6. Ce poussoir est représenté uniquement sur la figure 3, mais pas sur les autres figures où la plaque est illustrée de manière plus schématique.

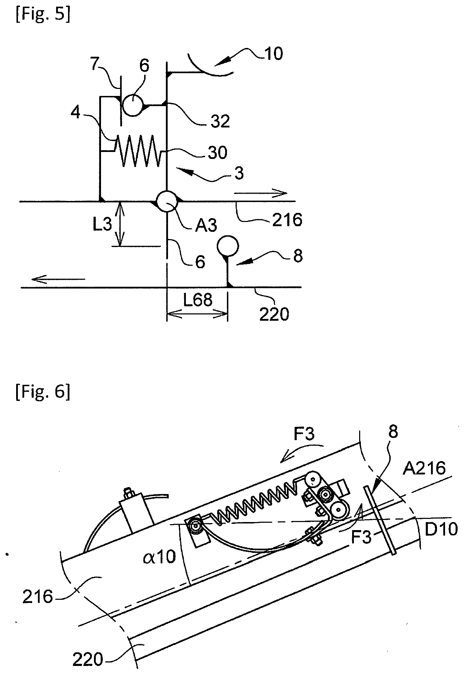

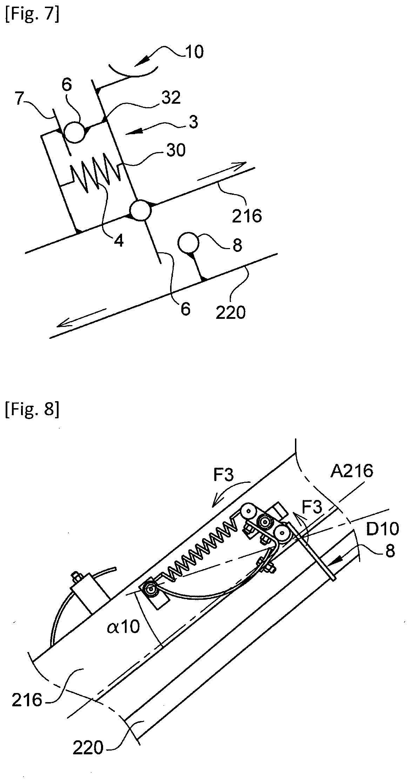

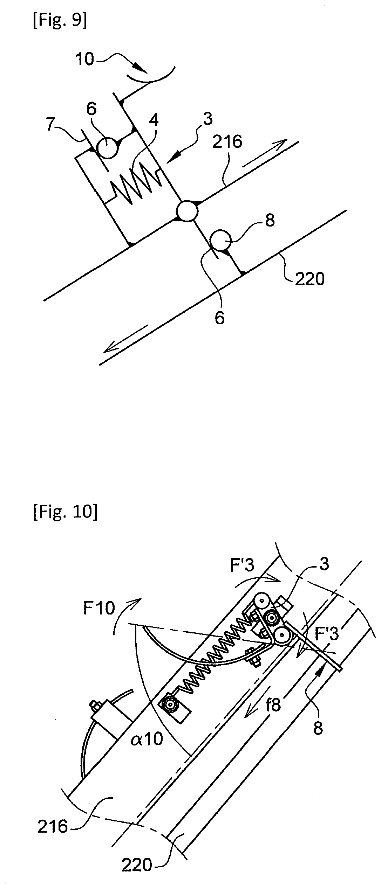

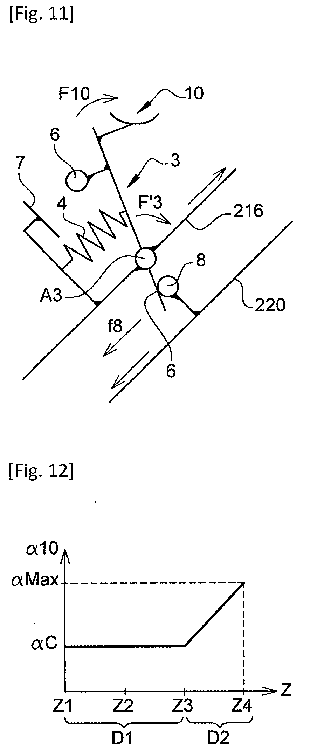

Les figures 4 à 11 montrent quatre étapes successives du développement du pantographe. Sur les figures 4 et 5, le bras articulé est sensiblement horizontal, à savoir qu'il présente un développement Z1 égal à 0. Sur les figures 6 et 7, le bras articulé est à moitié relevé, de sorte que le pantographe présente un développement Z2 voisin de 1800 millimètres. Sur les figures 8 et 9, le bras articulé est davantage relevé, de sorte que le pantographe présente un développement Z3 voisin de 3000 mm. Ces figures 8 et 9 correspondent à une position dite intermédiaire, qui sera définie plus en détail. Enfin sur les figures 10 et 11, le bras articulé est relevé de manière maximale, de sorte que le pantographe présente un développement Z4 voisin de 3500 mm.

Dans une première plage du développement du bras articulé, compris entre les positions d'une part des figures 4 et 5 et, d'autre part, des figures 8 et 9, la plaque 8 ne coopère pas avec le galet 6. En d'autres termes, cette plaque n'exerce aucune force sur ce galet. Par ailleurs, le ressort de compression exerce une force F4 qui a tendance à faire basculer le levier 3 selon la flèche F3, alors que ce basculement est limité par la présence de la butée 7. Dans ces conditions, la coopération entre ce ressort et cette butée permet d'immobiliser le levier par rapport au bras 210, en maintenant ce levier en appui contre la butée. Par conséquent, on conçoit que l'aileron est également sensiblement immobile par rapport au bras supérieur.

En d'autres termes, l'angle caractéristique de l'aileron, que forme ce dernier avec l'axe principal du bras, est sensiblement constant comme le montre la figure 12. Cela signifie que la variation de cet angle est typiquement inférieure à quelques degrés, en particulier à 1°. De manière typique, la valeur αc de cet angle caractéristique est voisine de 20° sur cette première plage de développement. Comme mentionné ci-dessus les figures 8 et 9 illustrent la position intermédiaire, dans laquelle la plaque vient en butée contre le galet, mais n'exerce pas encore d'actions mécaniques significatives sur ce dernier. Sur cette première plage de développement, l'orientation de l'aileron est commandée uniquement par le levier 3, lequel est immobilisé par le ressort 4 et la butée 7.

Puis, si le pantographe continue à se développer, la plaque 8 tend à repousser le galet 6 vers le bas et la gauche de la figure, ce qui est matérialisé par la flèche f8 sur les figures 10 et 11. Dans ces conditions, le levier a tendance à pivoter à l'encontre de l'action du ressort, ce qui est matérialisé par la flèche F'3. On conçoit que, dans ces conditions, l'aileron a également tendance à basculer par rapport au bras supérieur, selon la flèche F10. L'angle caractéristique de l'aileron, tel que défini ci-dessus, n'est plus constant mais augmente de manière sensiblement linéaire avec le développement du bras articulé, comme cela est montré sur la figure 12. Pour un développement maximal du pantographe, tel qu'illustré sur ces figures 10 et 11, la valeur αMax de cet angle caractéristique est typiquement voisine de 60°. Sur cette deuxième plage de développement, l'orientation de l'aileron est commandée à la fois par le levier articulé 3 et la plaque fixe 8.

Sur les schémas de principe, à savoir les figures 5, 7, 9 et 11, la référence 6 est indiquée à deux reprises. En effet le galet désigné par cette référence 6 remplit une double fonction, à savoir qu'il vient en appui contre la butée 7 et, d'autre part, qu'il est repoussé par la plaque 8.

De manière avantageuse, la position basse des figures 4 et 5 et la position intermédiaire des figures 8 et 9 sont séparées d'une première distance verticale D1 d'au moins 500 mm, par exemple comprise entre 2 000 mm et 3 000 mm, par exemple égale à 3 000 mm. Par ailleurs, cette position intermédiaire et la position haute des figures 10 et 11 sont séparées d'une deuxième distance verticale D2 d'au moins 500 mm, par exemple comprise entre 500 mm et 1 500 mm, par exemple égale à 500 mm. La variation de l'angle caractéristique, en fonction du développement du bras articulé, est illustrée sur la figure 12. Cette dernière matérialise également les valeurs successives de développement Z1 à Z4 ainsi que les distances D1 et D2, comme cela a été présenté ci-dessus.

Dans les différentes positions des figures 4, 6 8 et 10, selon que le véhicule ferroviaire se déplace vers la droite ou vers la gauche selon la figure 1, l'effet de l'aileron est le suivant. Un effet déportant correspond à une force tendant à plaquer le pantographe vers le bas. Un effet nul correspond à un effort significativement inférieur à l'effort déportant, à savoir 10 fois inférieur ou davantage.

Dans la position basse de la figure 4, l'effet de l'aileron 10 est déportant lorsque le train se déplace vers la droite. En revanche, l'effet aérodynamique est nul lorsque le train se déplace vers la gauche.

Dans la position à moitié relevée de la figure 6, l'effet de l'aileron 10 est nul, à la fois lorsque le train se déplace vers la droite et vers la gauche.

Dans la position intermédiaire de la figure 8, l'effet de l'aileron 10 est déportant lorsque le train se déplace vers la gauche. En revanche, l'effet aérodynamique est nul lorsque le train se déplace vers la droite. En d'autres termes, cet effet est l'inverse de celui de la position basse,

Enfin, dans la position haute de la figure 10, l'effet de l'aileron 10 est légèrement déportant lorsque le train se déplace vers la droite. En revanche, l'effet aérodynamique est nul lorsque le train se déplace vers la gauche.

Ainsi sur la première plage de développement du bras articulé, compris entre les figures 4 et 8, les deux ailerons 10 et 12 sont fixes par rapport à la tige supérieure principale 216. Le dispositif de compensation, équipant le pantographe conforme à l'invention, est alors similaire à celui utilisé dans l'art antérieur pour régler la pression à l'aide d'ailerons fixes sur une étendue usuelle de plage de développement. En conséquence, sur cette première plage de développement, la mise en oeuvre du pantographe conforme à l'invention, en particulier pour trouver les orientations appropriées des ailerons, est analogue à celle de l'art antérieur. De la sorte, cette mise en oeuvre s'en trouve facilitée. Au-delà de cette première plage de développement usuelle, à savoir dans la seconde plage de développement du bras articulé, comprise entre les figures 8 et 10, le dispositif d'orientation de l'aileron mobile 10 permet d'obtenir une compensation spécifique pour les grandes valeurs de développement. En outre, cette compensation est simple à régler, par exemple en ajustant la longueur du bras de levier L3

L'invention n'est pas limitée à l'exemple décrit et représenté, en référence aux figures 3 à 12.

À titre de première variante non représentée, on peut prévoir d'inverser le positionnement des moyens de support et d'immobilisation, par rapport aux moyens d'orientation. Dans ce cas, les moyens de support et les moyens d'immobilisation sont placés sur la tige supérieure auxiliaire 220, alors que les moyens d'orientation sont placés sur la tige supérieure principale 216. Cela ne modifie pas le profil de variation de l'angle caractéristique.

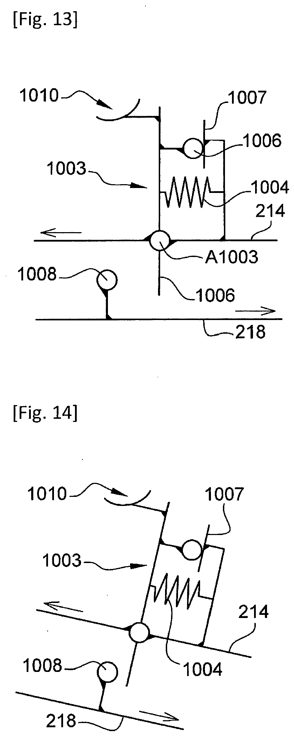

Les figures 13 à 17 illustrent une autre variante, dans laquelle les moyens de support, d'immobilisation et d'orientation sont montés sur les tiges inférieures du pantographe. Sur ces figures 13 à 17 les éléments mécaniques, analogues à ceux des figures 3 à 12, y sont affectés des mêmes numéros de référence augmentés du nombre 1000.

De façon plus précise le levier de support 1003, le ressort de traction 1004 et la butée 1007 sont placés sur la tige inférieure principale 214, alors que la plaque d'orientation 1008 est placée sur la tige inférieure auxiliaire 218. Les moyens permettant le montage de ces éléments mécaniques sur ces tiges sont similaires à ceux, qui ont été décrits en référence au mode de réalisation ci-dessus.

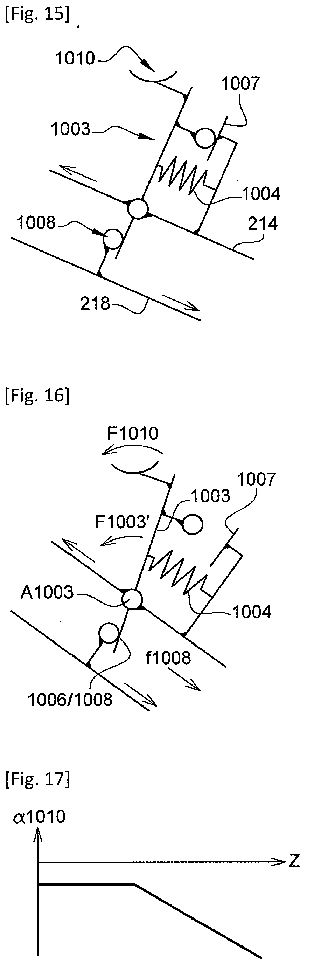

Le profil de variation de l'angle caractéristique α1010, ainsi obtenu, est illustré sur la figure 17. Dans une première plage du développement du pantographe, pour laquelle la plaque 1008 n'agit pas sur le galet 1006, cet angle caractéristique est sensiblement constant. Puis, comme le montre la figure 16, lorsque que cette plaque repousse ce galet 1006, l'aileron 1010 est entraîné en rotation selon la flèche F1010. De la sorte, l'angle caractéristique diminue de façon continue.

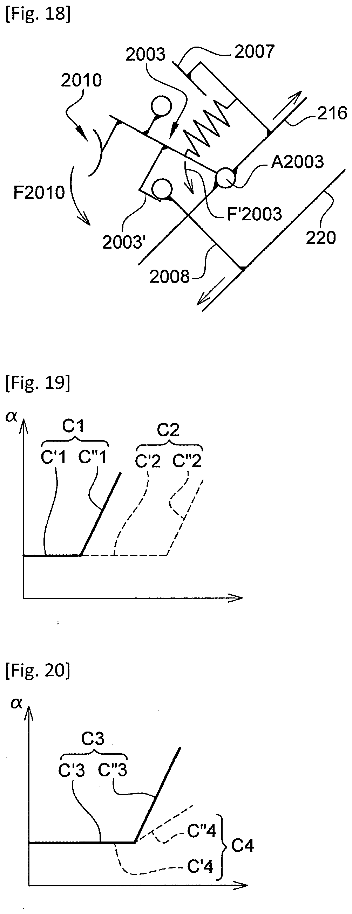

La figure 18 illustre un mode supplémentaire de réalisation de l'invention. Sur cette figure 18, les éléments mécaniques, analogues à ceux des figures 3 à 12, y sont affectés des mêmes numéros de référence augmentés du nombre 2000.

Le mode de réalisation de cette figure 18 diffère, par rapport au premier mode de réalisation, en ce que la plaque d'orientation 2008 n'agit pas sur le galet 2006 mais sur un élément mécanique distinct, matérialisé schématiquement par un rebord 2003' du levier 2003. Dans ces conditions, lorsque que cette plaque repousse ce rebord, le levier ainsi que l'aileron mobile sont entraînés en rotation F2010, dans un sens opposé à celui du premier mode de réalisation.

D'autres effets aérodynamiques peuvent être mis en oeuvre, par exemple en modifiant l'angle initial de l'aileron mobile lorsque le pantographe est en position basse, en inversant le sens de sa concavité, ou encore en changeant sa forme.

L'invention trouve également son application à un pantographe formé par plus de deux tronçons, en particulier trois tronçons mutuellement articulés. Dans ce cas, les moyens de support, d'immobilisation et d'orientation sont montés sur des tiges parallèles, constituant l'un de ces tronçons.

La figure 19 illustre une possibilité supplémentaire, permettant de faire varier le profil de l'angle caractéristique. À cet effet, il est possible de régler la distance séparant, selon l'axe principal des tiges, la plaque d'orientation 8 et le galet 6. On conçoit que, en augmentant cette distance, on allonge la région initiale de la courbe, pour laquelle l'angle caractéristique est constant.

Sur la figure 5 on note L68 la distance séparant, lorsque les tiges sont en position horizontale, cette plaque 8 et ce galet 6. Sur la figure 19 on a illustré une première courbe C1 en traits pleins, pour laquelle cette distance est faible, ainsi qu'une deuxième courbe C2 en traits pointillés, pour laquelle cette distance est plus élevée. On constate que la première courbe présente une région initiale C'1 de valeur constante, suivie par une région finale C"1 de valeur croissante. Par ailleurs la deuxième courbe présente une région initiale C'2, dont la valeur est constante en étant identique à celle de la région C'1, mais dont la longueur est plus grande que celle de cette région C'1. Cette courbe C2 présente en outre une région finale C"2, décalée par rapport à la région C"1, tout en présentant une pente identique.

Dans cet esprit il est avantageux que la plaque 8 soit montée de manière coulissante sur la tige 220, par tous moyens appropriés. On peut par exemple prévoir que cette plaque est fixée sur un fourreau, qui peut être solidarisé à la tige selon des positions longitudinales différentes. Cette disposition constructive est avantageuse, en ce qu'elle permet de faire varier de manière simple la distance L68 précitée, ainsi que le profil de l'angle caractéristique de l'aileron.

La figure 20 illustre une possibilité supplémentaire, permettant de faire varier le profil de l'angle caractéristique. À cet effet il est possible de régler le bras de levier exercé par les moyens de support pivotants. Ce bras de levier, montré sur les figures 4 et 5, correspond à la distance L3 entre l'axe de rotation A3 du levier et le point d'appui de la plaque 8 sur ce levier. On conçoit que, en modifiant cette longueur, on peut faire varier la pente de la courbe de l'angle caractéristique.

Cette figure 20 illustre une première courbe C3 en traits pleins, pour laquelle le bras de levier est faible, ainsi qu'une deuxième courbe C4 en traits pointillés, pour laquelle ce bras de levier est plus élevé. On constate que ces deux courbes présentent des régions initiales C'3 et C'4 identiques, à la fois en ce qui concerne leurs valeurs et leur longueur. Elles sont suivies par des régions finales C"3 et C"4 dont les pentes sont différentes, la pente étant plus élevée si le bras de levier est faible.

Dans cet esprit il est avantageux que la longueur totale du levier soit réglable, et/ou que la plaque soit montée sur un support de longueur réglable. Une telle longueur réglable peut être obtenue, par tous moyens appropriés. On peut par exemple prévoir que ce levier et/ou le support de la plaque présentent une structure télescopique. Cette disposition constructive est avantageuse, en ce qu'elle permet de faire varier de manière simple le bras de levier précité, ainsi que le profil de l'angle caractéristique de l'aileron.

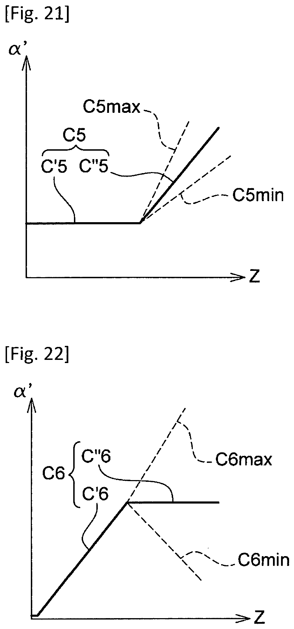

Les figures 21 et 22 illustrent les avantages de l'invention, vis-à-vis de l'enseignement de FR 3 062 824 exposé ci-dessus. Ces deux figures représentent l'évolution d'un angle caractéristique de l'aileron, en fonction de l'extension du pantographe. On soulignera que, sur ces figures 21 et 22, cet angle caractéristique α' est différent de celui illustré sur les figures précédentes. En effet l'angle des figures 21 et 22 est formé, d'une part, par la droite D10 reliant les extrémités opposées de l'aileron et, d'autre part, par l'horizontale (et non pas l'axe principal de la tige comme sur les figures précédentes).

Dans l'art antérieur, illustré par la figure 21, la courbe C5 de variation de l'angle caractéristique comprend une région initiale C'5 de valeur constante, laquelle est suivie par une région finale C"5 globalement croissante. Pour ce pantographe de l'État de la technique, cet angle caractéristique présente seulement une faible amplitude de réglage, dont l'amplitude est matérialisée par les lignes pointillées C5 max et C5min.

Comme cela est montré sur la figure 22, la courbe C6 de variation de l'angle caractéristique conforme à l'invention comprend une région initiale C'6 de valeur croissante. Celle-ci est suivie par une région finale C"6 dont le profil présente une amplitude de variation beaucoup plus importante que dans l'art antérieur. En effet cette région finale peut être croissante, sensiblement constante, ou encore décroissante. Comme pour la figure 21, cette amplitude est matérialisée par les lignes pointillées C6max et C6min de la figure 22.

## Revendications

1. Pantographe (108) comportant :
- un châssis (202) auquel un repère (R) est attaché, le repère (R) comportant une direction longitudinale (L), une direction verticale (V) et une direction transversale (T), la direction longitudinale (L) et la direction verticale (V) définissant ensemble un plan vertical,
- un archet (208) destiné à être au contact d'une caténaire (104) pour capter un courant d'alimentation passant dans la caténaire (104),
- un bras articulé (210) reliant l'archet (208) au châssis (202) est conçu pour se développer verticalement afin de déplacer dans le plan vertical l'archet (208) par rapport au châssis (202), ce bras articulé comprenant au moins une tige principale (216) et au moins une tige auxiliaire (220), chaque tige principale et chaque tige auxiliaire étant sensiblement parallèles et mobiles l'une par rapport à l'autre, selon leur axe principal commun,
- un ensemble d'aileron comprenant au moins un aileron mobile (10) par rapport au bras articulé,
- des moyens (3) de support de l'aileron mobile (10), ces moyens de support étant montés de manière mobile sur l'une parmi la tige principale et la tige auxiliaire, dite tige de support (216)
- des moyens d'immobilisation (4, 7), aptes à immobiliser les moyens de support par rapport à la tige de support,
- des moyens d'orientation (8), montés sur l'autre parmi la tige principale et la tige auxiliaire, dite tige d'orientation (220), ces moyens d'orientation étant aptes à déplacer les moyens de support par rapport à la tige de support à l'encontre des moyens d'immobilisation
ces moyens d'orientation étant adaptés pour que
- sur une première plage de développement du bras articulé (210) dans laquelle l'archet (208) se déplace entre une position basse et une position intermédiaire, ces moyens d'orientation n'agissent pas sur les moyens de support, de sorte qu'un angle caractéristique (α10) de l'aileron, formé dans le plan vertical par l'aileron mobile et l'axe principal (A216) de la tige de support, est sensiblement constant ; et
- sur une deuxième plage de développement du bras articulé (210) dans laquelle l'archet (208) se déplace entre la position intermédiaire et une position haute, ces moyens d'orientation agissent sur les moyens de support, de sorte que l'angle caractéristique de l'aileron varie de façon continue.

2. Pantographe selon la revendication 1, dans lequel les moyens de support (3) sont montés de manière pivotante par rapport à la tige de support (216), autour d'un axe (A3) transversal à cette tige de support.

3. Pantographe selon la revendication 1 ou 2, dans lequel les moyens de support comprennent un organe de support, notamment un levier (3), solidaire de l'aileron mobile (10).

4. Pantographe selon l'une des revendications précédentes, dans lequel les moyens d'immobilisation comprennent des moyens élastiques (4) ainsi qu'une butée (7) solidaire de la tige de support (216), les moyens de support étant aptes à venir en appui sur ladite butée, sous l'effet des moyens élastiques, dans la première plage de développement.

5. Pantographe selon l'une des revendications précédentes, dans lequel les moyens d'orientation comprennent un organe d'orientation, notamment une plaque (8), monté fixe sur la tige d'orientation (220).

6. Pantographe selon l'une des revendications précédentes, dans lequel le bras comprend une tige supérieure principale (216) formant ladite tige de support, ainsi qu'une tige supérieure auxiliaire (220) formant ladite tige d'orientation.

7. Pantographe selon l'une des revendications précédentes, dans lequel la valeur sensiblement constante (αc) de l'angle caractéristique, sur la première plage de développement, est voisine de 20°.

8. Pantographe selon l'une des revendications précédentes, dans lequel la valeur (αMax) de l'angle caractéristique, pour un développement maximal du bras articulé, est voisine de 60°.

9. Pantographe selon l'une des revendications précédentes, dans lequel il est prévu un aileron fixe (12) par rapport à la tige de support, ainsi qu'un aileron mobile (10) par rapport à la tige de support, ces deux ailerons étant disposés sur des côtés latéraux opposés de cette tige de support.

10. Pantographe selon la revendication précédente, dans lequel l'aileron fixe et l'aileron mobile présentent des concavités opposées, en particulier l'aileron fixe présente une concavité tournée vers le bas et l'aileron mobile présente une concavité tournée vers le haut.

11. Pantographe selon l'une des revendications précédentes, dans lequel les moyens d'orientation sont montés de manière coulissante sur la tige d'orientation.

12. Pantographe selon l'une des revendications précédentes, dans lequel les moyens de support et/ou les moyens d'orientation présentent une longueur réglable, notamment grâce à une structure télescopique.

13. Véhicule ferroviaire (100) comportant :
- un toit (106),
- un pantographe (108) selon l'une quelconque des revendications précédentes, le châssis (202) du pantographe étant fixé au toit (106) du véhicule ferroviaire (100).

## Patentansprüche

1. Scherenstromabnehmer (108), Folgendes beinhaltend:
- ein Gestell (202), an dem eine Markierung (R) befestigt ist, wobei die Markierung (R) eine Längsrichtung (L), eine vertikale Richtung (V) und eine Querrichtung (T) beinhaltet, wobei die Längsrichtung (L) und die vertikale Richtung (V) gemeinsam eine vertikale Ebene definieren,
- einen Bogen (208), der dazu bestimmt ist, in Kontakt mit einer Oberleitung (104) zu sein, um einen Versorgungsstrom zu erfassen, der durch die Oberleitung (104) verläuft,
- einen Gelenkarm (210), der den Bogen (208) mit dem Gestell (202) verbindet, und gestaltet ist, um sich vertikal zu entfalten, um den Bogen (208) in Bezug auf das Gestell (202) in der vertikalen Ebene zu verschieben, wobei dieser Gelenkarm mindestens ein Hauptgestänge (216) und mindestens ein Hilfsgestänge (220) umfasst, wobei jedes Hauptgestänge und jedes Hilfsgestänge im Wesentlichen parallel und entlang ihrer gemeinsamen Hauptachse in Bezug zueinander beweglich sind,
- eine Flügelbaugruppe, die mindestens einen in Bezug auf den Gelenkarm beweglichen Flügel (10) umfasst,
- Mittel (3) zum Stützen des beweglichen Flügels (10), wobei diese Mittel zum Stützen beweglich auf einem aus dem Hauptgestänge und dem Hilfsgestänge, Stützgestänge (216) genannt, montiert sind,
- Mittel zum Feststellen (4, 7), die imstande sind, die Mittel zum Stützen in Bezug auf die Stützgestänge festzustellen,
- Mittel zum Ausrichten (8), die auf dem anderen aus dem Hauptgestänge und dem Hilfsgestänge, Ausrichtgestänge (220) genannt montiert sind, wobei diese Mittel zum Ausrichten imstande sind, die Mittel zum Stützen in Bezug auf das Stützgestänge bei Antreffen der Mittel zum Feststellen zu verschieben
wobei diese Mittel zum Ausrichten angepasst sind, damit
- in einem ersten Entfaltungsbereich des Gelenkarmes (210), in dem sich der Bogen (208) zwischen einer unteren Position und einer Zwischenposition verschiebt, diese Mittel zum Ausrichten nicht auf die Mittel zum Stützen einwirken, sodass ein kennzeichnender Winkel (*α*10) des Flügels, der in der vertikalen Ebene durch den beweglichen Flügel und die Hauptachse (A216) des Stützgestänges gebildet wird, im Wesentlichen konstant ist; und
- in einem zweiten Entfaltungsbereich des Gelenkarmes (210), in dem sich der Bogen (208) zwischen einer Zwischenposition und einer oberen Position verschiebt, diese Mittel zum Ausrichten auf die Mittel zum Stützen einwirken, sodass sich der kennzeichnende Winkel des Flügels kontinuierlich verändert.

2. Scherenstromabnehmer nach Anspruch 1, wobei die Mittel zum Stützen (3) in Bezug auf das Stützgestänge (216) um eine Achse (A3) quer zu diesem Stützgestänge schwenkbar montiert sind.

3. Scherenstromabnehmer nach Anspruch 1 oder 2, wobei die Mittel zum Stützen ein Stützorgan, insbesondere einen Hebel (3) umfassen, der fest mit dem beweglichen Flügel (10) verbunden ist.

4. Scherenstromabnehmer nach einem der vorstehenden Ansprüche, wobei die Mittel zum Feststellen elastische Mittel (4), sowie einen Anschlag (7) umfassen, der fest mit dem Stützgestänge (216) verbunden ist, wobei die Mittel zum Stützen imstande sind, sich in dem ersten Entfaltungsbereich unter der Wirkung der elastischen Mittel an dem Anschlag anzulegen.

5. Scherenstromabnehmer nach einem der vorstehenden Ansprüche, wobei die Mittel zum Ausrichten ein Ausrichtorgan, insbesondere eine Platte (8) umfassen, die fest auf dem Ausrichtgestänge (220) montiert ist.

6. Scherenstromabnehmer nach einem der vorstehenden Ansprüche, wobei der Arm ein oberes Hauptgestänge (216), welches das Stützgestänge bildet, sowie ein oberes Hilfsgestänge (220) umfasst, welches das Ausrichtgestänge bildet.

7. Scherenstromabnehmer nach einem der vorstehenden Ansprüche, wobei der im Wesentlichen konstante Wert (*α*c) des kennzeichnenden Winkels im ersten Entfaltungsbereich in der Nähe von 20° liegt.

8. Scherenstromabnehmer nach einem der vorstehenden Ansprüche, wobei der Wert (*α*Max) des kennzeichnenden Winkels für eine maximale Entfaltung des Gelenkarmes in der Nähe von 60° liegt.

9. Scherenstromabnehmer nach einem der vorstehenden Ansprüche, wobei ein fester Flügel (12) in Bezug auf das Stützgestänge, sowie ein beweglicher Flügel (10) in Bezug auf das Stützgestänge vorgesehen sind, wobei diese beiden Flügel an gegenüberliegenden lateralen Seiten dieses Stützgestänges angeordnet sind.

10. Scherenstromabnehmer nach dem vorstehenden Anspruch, wobei der feste Flügel und der bewegliche Flügel gegenüberliegende Konkavitäten aufweisen, insbesondere der feste Flügel eine Konkavität aufweist, die nach unten weist, und der bewegliche Flügel eine Konkavität aufweist, die nach oben weist.

11. Scherenstromabnehmer nach einem der vorstehenden Ansprüche, wobei die Mittel zum Ausrichten gleitend auf dem Ausrichtgestänge montiert sind.

12. Scherenstromabnehmer nach einem der vorstehenden Ansprüche, wobei die Mittel zum Stützen und/oder die Mittel zum Ausrichten insbesondere dank einer Teleskopstruktur eine einstellbare Länge aufweisen.

13. Schienenfahrzeug (100), Folgendes beinhaltend:
- ein Dach (106),
- einen Scherenstromabnehmer (108) nach einem der vorstehenden Ansprüche, wobei das Gestell (202) des Scherenstromabnehmers am Dach (106) des Schienenfahrzeugs (100) fixiert ist.

## Claims

1. A pantograph (108) including:
- a chassis (202) to which a marking (R) is attached, the marking (R) including a longitudinal direction (L), a vertical direction (V), and a transverse direction (T), the longitudinal direction (L) and the vertical direction (V) together defining a vertical plane,
- a bow (208) intended to be in contact with a catenary (104) to capture a power supply current flowing through the catenary (104),
- an articulated arm (210) linking the bow (208) to the chassis (202) is designed to vertically extend in order to move the bow (208) in the vertical plane relative to the chassis (202), this articulated arm comprising at least one main rod (216) and at least one auxiliary rod (220), each main rod and each auxiliary rod being substantially parallel and movable relative to each other, according to their common main axis,
- an aileron assembly comprising at least one aileron (10) movable relative to the articulated arm,
- means (3) for supporting the movable aileron (10), these support means being movably mounted on one amongst the main rod and the auxiliary rod, called support rod (216),
- immobilisation means (4, 7), able to immobilise the support means with respect to the support rod,
- orienting means (8), mounted on the other one amongst the main rod and the auxiliary rod, called orienting rod (220), these orienting means being able to move the support means relative to the support rod against the immobilisation means,
these orienting means being adapted so that
- over a first range of extension of the articulated arm (210) in which the bow (208) moves between a low position and an intermediate position, these orienting means do not act on the support means, so that a characteristic angle (α10) of the aileron, formed in the vertical plane by the movable aileron and the main axis (A216) of the support rod, is substantially constant; and
- over a second range of extension of the articulated arm (210) in which the bow (208) moves between the intermediate position and a high position, these orienting means act on the support means, so that the characteristic angle of the aileron continuously varies.

2. The pantograph according to claim 1, wherein the support means (3) are pivotally mounted relative to the support rod (216), about an axis (A3) transverse to this support rod.

3. The pantograph according to claim 1 or 2, wherein the support means comprise a support member, in particular a lever (3), secured to the movable aileron (10).

4. The pantograph according to one of the preceding claims, wherein the immobilisation means comprise elastic means (4) as well as a stop (7) secured to the support rod (216), the support means being able to bear on said stop, under the effect of the elastic means, in the first extension range.

5. The pantograph according to one of the preceding claims, wherein the orienting means comprise an orienting member, in particular a plate (8), fixedly mounted on the orienting rod (220).

6. The pantograph according to one of the preceding claims, wherein the arm comprises an upper main rod (216) forming said support rod, as well as an upper auxiliary rod (220) forming said orienting rod.

7. The pantograph according to one of the preceding claims, wherein the substantially constant value (αc) of the characteristic angle, over the first extension range, is close to 20°.

8. The pantograph according to one of the preceding claims, wherein the value (αMax) of the characteristic angle, for a maximum extension of the articulated arm, is close to 60°.

9. The pantograph according to one of the preceding claims, wherein an aileron (12) fixed relative to the support rod, as well as an aileron (10) movable relative to the support rod, are provided, these two ailerons being disposed on opposite lateral sides of this support rod.

10. The pantograph according to the preceding claim, wherein the fixed aileron and the movable aileron have opposite concavities, in particular the fixed aileron has a concavity turned downwards and the movable aileron has a concavity turned upwards.

11. The pantograph according to one of the preceding claims, wherein the orienting means are slidably mounted on the orienting rod.

12. The pantograph according to one of the preceding claims, wherein the support means and/or the orienting means have an adjustable length, in particular thanks to a telescopic structure.

13. A rail vehicle (100) including:
- a roof (106);
- a pantograph (108) according to any one of the preceding claims, the chassis (202) of the pantograph being fastened to the roof (106) of the rail vehicle (100) .
